# EUROPÄISCHE PATENTSCHRIFT

(11) **EP 2 673 325 B1**
(45) Veröffentlichungstag und Bekanntmachung des Hinweises auf die Patenterteilung: **05.11.2014**
(21) Anmeldenummer: 12700042.0
(22) Anmeldetag: 06.01.2012
(51) Int. Cl.: C09D 133/16, C09D 127/12, B05D 1/00, C08K 5/01

(54) **VERFAHREN ZUR HERSTELLUNG EINER FARB- UND /ODER EFFEKTGEBENDEN MEHRSCHICHTIGEN LACKIERUNG**
METHOD FOR PRODUCING A MULTI-COAT COLOUR AND/OR EFFECT PAINT SYSTEM
PROCÉDÉ DE PRODUCTION D'UNE PEINTURE MULTICOUCHE COLORANTE ET/OU À EFFET

(30) Priorität: 09.02.2011 US 201161440879 P; 09.02.2011 EP 11153796
(43) Veröffentlichungstag der Anmeldung: 18.12.2013
(73) Patentinhaber: BASF Coatings GmbH, 48165 Münster (DE)
(72) Erfinder: STEINMETZ, Bernhard, 97535 Rütschenhausen (DE)
(86) Internationale Anmeldenummer: PCT/EP2012/050184
(87) Internationale Veröffentlichungsnummer: WO 2012/107249

(56) Entgegenhaltungen:
- DE-A1- 19 930 665
- DE-C1- 10 043 405

## Beschreibung

Die Erfindung betrifft ein Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Das oben beschriebene Verfahren ist bekannt (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) und wird beispielsweise in großem Umfang sowohl für die Erstlackierung (OEM) als auch für die Reparaturlackierung von Automobilkarossen eingesetzt.

Mit dem in Rede stehenden sogenannten basecoat/clearcoat Verfahren werden im Nass-in-nass Verfahren farb- und/oder effektgebende mehrschichtige Lackierungen erhalten, die insbesondere im Hinblick auf das Auftreten von Oberflächenstörungen und dabei vor allem im Hinblick auf das Auftreten von Kratern verbesserungsbedürftig sind. Insbesondere Krater werden oft durch Verunreinigung der Lacke und/oder Lackieranlagen mit Silikonölen und/oder fluorierten Verbindungen verursacht.

Die der vorliegenden Erfindung zugrundeliegende Aufgabenstellung besteht somit in der Bereitstellung eines Verfahrens der oben beschrieben Art mit dem farb- und/oder effektgebende mehrschichtige Lackierungen erhältlich sind, die gegenüber den Lackierungen des Standes der Technik verbessert sind. Die Lackierungen sollen insbesondere keine bzw. so wenig wie irgend möglich insbesondere durch Verunreinigung mit Silikonölen und/oder fluorierten Verbindungen verursachte Krater aufweisen.

Diese Aufgabe wird überraschenderweise dadurch gelöst, dass in Stufe (1) des oben beschriebenen basecoat/clearcoat Verfahrens ein pigmentierter wässriger Basislack eingesetzt wird, der eine Mischung M, bestehend aus (K1) einem verzweigten, 8 bis 17, bevorzugt 10 bis 17, besonders bevorzugt 10 bis 16 Kohlenstoffatome aufweisenden Alkan oder einer Mischung aus derartigen Alkanen, (K2) einem verzweigten, 18 bis 25, bevorzugt 18 bis 24, besonders bevorzugt 18 bis 22 Kohlenstoffatome aufweisenden Alkan oder einer Mischung aus derartigen Alkanen und (K3) einem wassermischbaren fluorierten Polymer oder eine Mischung aus wassermischbaren fluorierten Polymeren, enthält, wobei
- die Mischung M in einer Menge von 0,1 bis 5, bevorzugt 0,15 bis 5, besonders bevorzugt 0,2 bis 4,5 Gew.-%, bezogen auf das Gewicht des in Stufe (1) aufgetragenen wässrigen Basislacks, vorliegt,
- die Komponente (K1) in einer Menge von 34 bis 94, bevorzugt 34 bis 89, besonders bevorzugt 34 bis 84 Gew.-%, bezogen auf das Gewicht der Mischung M vorliegt,
- die Komponente (K2) in einer Menge von 5 bis 46, vorzugsweise 10 bis 46, besonders bevorzugt 10 bis 40 Gew.-%, bezogen auf das Gewicht der Mischung M vorliegt,
- die Komponente (K3) in einer Menge von 1 bis 20, bevorzugt 1 bis 18, besonders bevorzugt 1 bis 15 Gew.-%, bezogen auf das Gewicht der Mischung M vorliegt,
- die Komponenten (K1) und (K2) einen Verzweigungsgrad aufweisen, der einem Verhältnis der Zahl der >CH- und -CH₂-Gruppen zu der Zahl der -CH3 Gruppen von mindestens 25:75, bevorzugt 30:70, besonders bevorzugt 40:60 entspricht.

Die Erfindung betrifft außerdem pigmentierte wässrige Lacke, die zur Herstellung von farb- und/oder effektgebenden mehrschichtigen Lackierungen geeignet sind sowie die Verwendung der Mischungen M zur Verminderung von Oberflächenstörungen, insbesondere zur Verminderung von Kratern in aus wässrigen pigmentierten Lacken hergestellten Lackierungen.

In Stufe (1) des erfindungsgemäßen Verfahrens können im Prinzip alle bekannten wässrigen Basislacke eingesetzt werden, wenn sie die oben definierte Mischung (M) in einer Menge von 0,1 bis 5, bevorzugt 0,15 bis 5, besonders bevorzugt 0,2 bis 4,5 Gew.-%, bezogen auf das Gewicht des in Stufe (1) aufgetragenen wässrigen Basislacks, enthalten.

Basislacke werden dann als "wässrig" bezeichnet, wenn sie 30 bis 70 Gew.-% Wasser, bezogen auf das Gesamtgewicht des Basislacks enthalten. Die Begriffe "wässriger Basislack" und "Wasserbasislack" werden in dieser Anmeldung als gleichbedeutende Begriffe verwendet.

Die erfindungsgemäß eingesetzten Basislacke enthalten farb- und/oder effektgebende Pigmente.

Im erfindungsgemäßen Verfahren werden bevorzugt Basislacke eingesetzt, die als Bindemittel physikalisch, thermisch oder thermisch und mit aktinischer Strahlung härtbare Bindemittel enthalten. Besonders bevorzugt ist als Bindemittel mindestens ein gesättigtes oder ungesättigtes Polyurethanharz enthalten. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der entweder ein separat vorliegendes Vernetzungsmittel und/oder selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die "mit sich selbst" reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28, bis Seite 9, Zeile 24, bekannt.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder γ-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind Basislacke bevorzugt, die thermisch oder thermisch und mit aktinischer Strahlung also mittels "Dual Cure" härtbar sind. Insbesondere solche, die als Bindemittel ein Polyurethanharz und als Vernetzungsmittel ein Aminoplastharz oder ein blockiertes oder unblockiertes Polyisocyanat enthalten. Unter den Aminoplastharzen sind insbesondere Melaminharze bevorzugt.

Geeignete gesättigte oder ungesättigte Polyurethanharze werden beispielsweise beschrieben in
- der deutschen Patentanmeldung DE 199 11 498 A1, Spalte 1, Zeilen 29 bis 49, und Spalte 4, Zeile 23, bis Spalte 11, Zeile 5,
- der deutschen Patentanmeldung DE 199 48 004 A1, Seite 4, Zeile 19, bis Seite 13, Zeile 48,
- der europäischen Patentanmeldung EP 0 228 003 A1, Seite 3, Zeile 24, bis Seite 5, Zeile 40,
- der europäischen Patentanmeldung EP 0 634 431 A1, Seite 3, Zeile 38, bis Seite 8, Zeile 9, oder
- der internationalen Patentanmeldung WO 92/15405, Seite 2, Zeile 35, bis Seite 10, Zeile 32.

Die Polyurethanharze enthalten zur Stabilisierung vorzugsweise entweder
- funktionelle Gruppen, die durch Neutralisationsmittel und/oder Quaternisierungsmittel in Kationen überführt werden können, und/oder kationische Gruppen oder
- funktionelle Gruppen, die durch Neutralisationsmittel in Anionen überführt werden können, und/oder anionische Gruppen und/oder
- nicht ionische hydrophile Gruppen.

Die Polyurethanharze sind linear oder enthalten Verzweigungen. Sie können auch als Pfropfcopolymere vorliegen. In diesem Fall sind sie bevorzugt mit Polyacrylatharzen gepfropft.

Solche Pfropfcopolymere sind dem Fachmann gut bekannt und werden beispielsweise in der DE 199 48 004 A1 beschrieben.

Wenn die bevorzugt eingesetzten Basislacke als selbstvernetzende Systeme vorliegen, dann liegt der Polyurethanharzgehalt bei 50 bis 100 Gew.-% bevorzugt 50 bis 90 Gew.-% und besonders bevorzugt 50 bis 80 Gew.-%, bezogen auf den filmbildenden Festkörper des Basislacks.

Unter filmbildendem Festkörper ist der nichtflüchtige Gewichtsanteil des Beschichtungsstoffes ohne Pigmente und/oder Füllstoffe, der nach zweistündiger Trockung bei 120 °C als Rückstand verbleibt, zu verstehen.

Im Falle von fremdvernetzenden Systemen liegt der Polyurethanharzgehalt zwischen 10 und 80 Gew.-%, bevorzugt zwischen 15 und 75 Gew.-% und besonders bevorzugt zwischen 20 und 70 Gew.- %, jeweils bezogen auf den filmbildenden Festkörper des Basislacks.

Es ist erfindungswesentlich, dass die in Stufe (1) des erfindungsgemäßen Verfahrens eingesetzten wässrigen Basislacke eine Mischung M, bestehend aus (K1) einem verzweigten, 8 bis 17, bevorzugt 10 bis 17, besonders bevorzugt 10 bis 16 Kohlenstoffatome aufweisenden Alkan oder einer Mischung aus derartigen Alkanen, (K2) einem verzweigten, 18 bis 25, bevorzugt 18 bis 24, besonders bevorzugt 18 bis 22 Kohlenstoffatome aufweisenden Alkan oder einer Mischung aus derartigen Alkanen und (K3) einem wassermischbaren fluorierten Polymer oder eine Mischung aus wassermischbaren fluorierten Polymeren, enthalten, wobei
- die Mischung M in einer Menge von 0,1 bis 5, bevorzugt 0,15 bis 5, besonders bevorzugt 0,2 bis 4,5 Gew.-%, bezogen auf das Gewicht des in Stufe (1) aufgetragenen wässrigen Basislacks, vorliegt,
- die Komponente (K1) in einer Menge von 34 bis 94, bevorzugt 34 bis 89, besonders bevorzugt 34 bis 84 Gew.-%, bezogen auf das Gewicht der Mischung M vorliegt,
- die Komponente (K2) in einer Menge von 5 bis 46, bevorzugt 10 bis 46, besonders bevorzugt 10 bis 40 Gew.-%, bezogen auf das Gewicht der Mischung M vorliegt,
- die Komponente (K3) in einer Menge von 1 bis 20, bevorzugt 1 bis 18, besonders bevorzugt 1 bis 15 Gew.-%, bezogen auf das Gewicht der Mischung M vorliegt,
- die Komponenten (K1) und (K2) einen Verzweigungsgrad aufweisen, der einem Verhältnis der Zahl der >CH- und -CH₂-Gruppen zu der Zahl der -CH₃ Gruppen von mindestens 25:75, vorzugsweise 30:70, besonders bevorzugt 40:60 entspricht.

Wenn der Gehalt an den erfindungsgemäß eingesetzten Mischungen unter 0,1 Gew.% liegt, wird die der Erfindung zugrundeliegende Aufgabe nicht gelöst. Liegt der Gehalt bei mehr als 5 Gew.-% müssen unter Umständen Nachteile, wie z.B. eine Haftungsverschlechterung bei unterbrannten Lackierungen, in Kauf genommen werden.

Als Komponente (K1) werden verzweigte, 8 bis 17, vorzugsweise 10 bis 17, besonders bevorzugt 10 bis 16 Kohlenstoffatome aufweisende Alkane oder Mischungen aus derartigen Alkanen eingesetzt. Die als Komponente (K1) eingesetzten Alkane weisen einen Verzweigungsgrad auf, der einem Verhältnis der Zahl der >CH- und -CH₂- Gruppen zu der Zahl der -CH₃ Gruppen von mindestens 25:75, bevorzugt 30:70, besonders bevorzugt 40:60 entspricht. Der Verzweigungsgrad der als Komponente (K1) eingesetzten Alkane kann mittels ¹H-NMR Spektroskopie ermittelt werden.

Als Komponente (K1) können den oben angegebenen Verzweigungsgrad aufweisende Octan-, Nonan-, Decan-, Undecan-, Dodecan-, Tridecan-, Tetradecan-, Pentadecan-, Hexadecan- und Heptadecanisomere sowie Mischungen aus Octan- und/oder Nonan- und/oder Decan- und/oder Undecan- und/oder Dodecan- und/oder Tridecan- und/oder Tetradecan- und/oder Pentadecan- und/oder Hexadecan- und/oder Heptadecanisomeren, die den oben angegebenen Verzweigungsgrad aufweisen, eingesetzt werden.

Als Komponente (K1) werden bevorzugt Alkanmischungen eingesetzt, die unter der Marke Isopar L (Exxon Mobil) erhältlich sind.

Als Komponente (K2) werden verzweigte, 18 bis 25, vorzugsweise 18 bis 24, besonders bevorzugt 18 bis 22 Kohlenstoffatome aufweisende Alkane oder Mischungen aus derartigen Alkanen eingesetzt. Die als Komponente (K2) eingesetzten Alkane weisen einen Verzweigungsgrad auf, der einem Verhältnis der Zahl der >CH- und -CH₂- Gruppen zu der Zahl der -CH₃ Gruppen von mindestens 25:75, vorzugsweise 30:70, besonders bevorzugt 40:60 entspricht. Der Verzweigungsgrad der als Komponente (K2) eingesetzten Alkane kann mittels ¹H-NMR Spektroskopie ermittelt werden.

Als Komponente (K2) können den oben angegebenen Verzweigungsgrad aufweisende verzweigte Octadecan-, Nonadecan-, Eicosan-, Heneicosan-, Docosan-, Tricosan-, Tetracosan- und Pentacosanisomere sowie Mischungen aus Octadecan- und/oder Nonadecan- und/oder Eicosan- und/oder Heneicosan- und/oder Docosan- und/oder Tricosan- und/oder Tetracosan- und/oder Pentacosanisomeren, die den oben angegebenen Verzweigungsgrad aufweisen, eingesetzt werden.

Als Komponente (K2) werden bevorzugt Alkanmischungen eingesetzt, die unter der Marke Isopar V (Exxon Mobil) erhältlich sind.

Als Komponente (K3) wird ein wassermischbares fluoriertes Polymer oder eine Mischung aus wassermischbaren fluorierten Polymeren eingesetzt. Unter fluorierten Polymeren werden Polymere verstanden, die perfluorierte Alkylgruppen mit 2 bis 10, bevorzugt 2 bis 8, besonders bevorzugt 3 bis 8 Kohlenstoffatomen enthalten.

Als Komponente (K3) werden bevorzugt wassermischbare Poly(meth)acrylatharze eingesetzt, die ein gewichtsmittleres Molekulargewicht von 500 bis 100.000, bevorzugt 1.000 bis 90.000, besonders bevorzugt 2.000 bis 75.000 Dalton, gemessen mittels Gelpermeationschromatographie gegen einen Polystyrolstandard nach DIN 55672-1 bis 3, aufweisen und herstellbar sind durch Polymerisation von (a) 1 bis 50, bevorzugt 2 bis 40, besonders bevorzugt 4 bis 35 Gew.% eines ethylenisch ungesättigten Monomeren, das eine perfluorierte Alkylgruppe mit 2 bis 10, bevorzugt 2 bis 8, besonders bevorzugt 3 bis 8 Kohlenstoffatomen enthält, oder einer Mischung aus solchen Monomeren, (b) 0,1 bis 30, bevorzugt 0,5 bis 25, besonders bevorzugt 1 bis 20 Gew% eines ethylenisch ungesättigten Monomeren, das mindestens eine hydrophile Gruppe enthält, oder eine Mischung aus derartigen Monomeren, (c) 49,9 bis 89,9, bevorzugt 59,5 bis 79,5, besonders bevorzugt 54 bis 64 Gew.% eines aliphatischen, cycloaliphatischen oder aromatischen, bevorzugt eines aliphatischen oder cycloaliphatischen, besonders bevorzugt eines aliphatischen Methacryl- oder Acrylsäureesters oder eine Mischung aus derartigen Estern und (d) 0 bis 40, bevorzugt 0 bis 30, besonders bevorzugt 0 bis 20 Gew. % eines von (a), (b) und (c) verschiedenen ethylenisch ungesättigten Monomeren oder eine Mischung aus derartigen Monomeren.

Beispiele für ethylenisch ungesättigte Monomere, die eine perfluorierte Alkylgruppe mit 4 bis 10, bevorzugt 5 bis 9, besonders bevorzugt 6 bis 8 Kohlenstoffatomen enthalten sind Perfluorbutylacrylat, Perfluorbutylmethacrylat, Perfluorpentylacrylat, Perfluorpentylmethacrylat, Perfluorhexylacrylat, Perfluorhexylmethacrylat, Perfluorheptylacrylat, Perfluorheptylmethacrylat, Perfluoroctylacrylat, Perfluoroctylmethacrylat, Perfluornonylacrylat, Perfluornonylmethacrylat, Perfluordecylacrylat und Perfluordecylmethacrylat.

Die als Komponente (b) einsetzbaren ethylenisch ungesättigten Monomere können beispielsweise Polyoxyethylengruppen, Polyoxypropylengruppen, Carboxylgruppen, Carboxylatgruppen, Sulfonsäuregruppen oder Sulfonatgruppen als hydrophile Gruppen enthalten. Geeignete Monomere sind z. B . Hydroxypolyethylenglycolacrylate, Hydroxypolyethylenglycolmethacrylate, Hydroxypolypropylenglycolacrylate, Hydroxypolypropylenglycolmethacrylate und deren Alkoxyderivate sowie Acrylsäure und Methacrylsäure. Als Komponente (b) werden bevorzugt säuregruppenhaltige Monomere, besonders bevorzugt Acrylsäure und/oder Methacrylsäure, in einer solchen Menge eingesetzt, dass die fluorierten Polymere eine Säurezahl von 20 - 300, bevorzugt 30 bis 250, besonders bevorzugt 30 bis 200 mg KOH/g aufweisen.

Für die als Komponente (c) einsetzbaren aliphatischen, cycloaliphatischen oder aromatischen Methacryl- und Acrylsäureester seien Methylmethacrylat, Methylacrylat, Ethylmethacrylat, Hydroxyethylmethacrylat, Ethylacrylat, Hydroxyethylacrylat Propylmethacrylat, Hydroxypropylmethacrylat, Propylacrylat, Hydroxypropylacrylat, n-Butylacrylat, i-Butylacrylat, Hydroxybutylacrylat, n-Butylmethacrylat, i-Butylmethacrylat, Hydroxybutylmethacrylat, Cyclohexylmethacrylat, Cyclohexylacrylat, Phenylmethacrylat und Phenylacrylat beispielhaft genannt.

Als von (a), (b) und (c) verschiedene ethylenisch ungesättigte Monomere können beispielsweise eingesetzt werden Cycloalkylvinylether wie Cyclohexylvinylether, Cycloalkylallylether wie Cyclohexylallylether, Alkylvinylether wie Ethylvinylether, Propylvinylether und Butylvinylether, Alkylallylether wie Ethylallylether, Propylallylether und Butylallylether, Hydroxyalkylvinylether wie Hydroxyethylvinylether, Hydroxypropylvinylether und Hydroxybutylvinylether, Hydroxyalkylallylether wie Hydroxyethylallylether, Hydroxypropylallylether und Hydroxybutylallylether, Vinylester wie Butylvinylester, Acrylamid, Methacrylamid und Styrol.

Die erfindungsgemäß eingesetzten Mischungen M enthalten als Komponente (K3) besonders bevorzugt ein fluoriertes Polymer, das ein gewichtsmittleres Molekulargewicht von 1.000 bis 90.000, bevorzugt 2000 bis 75.000 Dalton, gemessen mittels Gelpermeationschromotographie gegen einen Polystyrolstandard nach DIN 55672-1 bis 3, und eine Säurezahl von 100 bis 140, bevorzugt 110 bis 130 mg KOH/g aufweist und das n-Butylacrylat, i-Butylacrylat, n-Butylmethacrylat, Perfluorheptylacrylat und/oder Perfluorheptylmethacrylat sowie Acryl- und/oder Methacrylsäure als einpolymerisierte Monomere enthält. Derartige Polymere sind unter der Marke EFKA 3772 bei der BASF SE kommerziell erhältlich.

Darüber hinaus können die erfindungsgemäß eingesetzten Basislacke noch mindestens einen Zusatzstoff enthalten. Beispiele für derartige Zusatzstoffe sind rückstandsfrei oder im Wesentlichen rückstandsfrei thermisch zersetzbare Salze, Vernetzungsmittel wie die oben genannten Aminoplastharze und blockierte oder unblockierte Polyisocyanate, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide, Mattierungsmittel und Verdicker. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX ® 1550 der Firma Cognis. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem C₁-C₆-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den C₁-C₆-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylat-Copolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden zu den Poly(meth)acrylat basierten Bindemitteln, die in den erfindungsgemäßen Basislackzusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkenylgruppen mit 8 bis 30 Kohlenstoffatomen tragen. Typische Alkylgruppen sind beispielsweise Dodecyl oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden zu den Polyurethanen, die in den erfindungsgemäßen Basislack-Zusammensetzungen als Bindemittel eingesetzt werden können.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörper nach DIN EN ISO 3251 bestimmt. Die Messdauer betrug 60 min bei 125°C.

Die Herstellung der erfindungsgemäß eingesetzten Basislacke kann unter Einsatz der für die Herstellung von Basislacken üblichen und bekannten Mischverfahren und Mischaggregate erfolgen.

Die erfindungsgemäßen Basislacke können sowohl als Einkomponenten(1K), Zweikomponenten(2K)- oder Mehrkomponenten(3K, 4K)-Systeme zur Anwendung kommen.

In Eink omponenten(1K)-Systemen liegen Bindemittel und Vernetzungsmittel nebeneinander, d.h. in einer Komponente, vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen Bindemittel und Vernetzungsmittel getrennt voneinander in mindestens zwei Komponenten vor, die erst kurz vor der Applikation zusammengegeben werden. Diese Form wird dann gewählt, wenn Bindemittel und Vernetzungsmittel bereits bei Raumtemperatur miteinander reagieren. Lacke dieser Art werden vor allem zur Beschichtung thermisch empfindlicher Substrate, insbesondere in der Autoreparaturlackierung, angewandt.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Gegenstand der Erfindung ist auch die Verwendung der oben beschriebenen Mischung M zur Erhöhung der Nadelstichgrenze und/oder zur Verminderung von Oberflächenstörungen in wässrigen pigmentierten Lacken.

Im Folgenden soll die Erfindung anhand von Beispielen erläutert werden.

### Beispiele

### 1. Herstellung eines schwarzen Wasserbasislacks 1

Die in der Tabelle A unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 58 mPas bei einer Scherbelastung von 1000/sec, gemessen mit einem Rotations-Viskosimeter (Gerät Rheomat RM 180 der Firma Mettler-Toledo) bei 23°C, eingestellt.

**Tabelle A**

| Komponente | Gewichtsteile |
|---|---|
| **Wässrige Phase** | |
| 3%ige Na-Mg-Schichtsilikatlösung | 12,1 |
| Deionisertes Wasser | 5,2 |
| Polyurethandispersion, hergestellt gemäß Beispiel C, Spalte 16, Z. 10-35 der DE-A-4009858 | 15,6 |
| Polyester; hergestellt gemäß Beispiel D, Spalte 16, Z. 37-59 der DE-A-4009858 | 6,6 |
| Luwipal 052, Melaminformaldehydharz (BASF) | 4,9 |
| Butylglykol | 7,1 |
| Butyldiglykol | 1,2 |
| Tensid S (BASF) | 2,1 |
| 10%iges Dimethylethanolamin in Wasser | 0,9 |
| Polyurethanacrylat; hergestellt gemäß S. 7, Z. 55-S.8, Z. 23 der DE-A-4437535 | 3,3 |
| Deionisertes Wasser | 2,7 |
| 3 Gew.%ige wässrige Viscalex HV 30 Lösung; Rheologiemittel, erhältlich von BASF, in Wasser | 7,8 |
| Deionisertes Wasser | 5,9 |
| Triethylenglykol (BASF) | 1,7 |
| Mischung aus 10 Teilen eines handelsüblichen Ruß-Pigments (Cabot), 57 Teilen der oben beschriebenen Polyurethandispersion, 2,5 Teilen Pluriol P 900 (BASF), 7 Teilen Butylglykol und 23,5 Teilen deionisiertem Wasser | 3,6 |
| Mischung aus 12,5 Teilen eines handelsüblichen Ruß-Pigments (BASF), 69,8 Teilen der oben beschriebenen Polyurethandispersion, 1,2 Teilen Pluriol P 900 (BASF), 7 Teilen Butylglykol und 16,5 Teilen deionisiertem Wasser | 6,2 |
| Deionisertes Wasser | 2,2 |
| Mischung aus 2,7 Teilen Viscalex HV 30 (BASF), 7 Teilen Tensid S (BASF), 2 Teilen 10%iges Dimethylethanolamin in Wasser und 88,3 Teilen deionisiertem Wasser | 3 |
| Handelsübliches Perlglanzpigment (Merck) | 1 |
| Deionisertes Wasser | 7,2 |

| **Organische Phase** | |
|---|---|
| Handelsübliches Aluminiumpigment erhältlich von Firma Altana-Eckart | 0,1 |
| Butylglykol | 0,2 |
| Polyester; hergestellt gemäß Beispiel D, Spalte 16, Z. 37-59 der DE-A-4009858 | 0,4 |

### 2. Herstellung von kontaminierten Wasserbasislacken

### Wasserbasislack K-1:

Wasserbasislack 1 wurde mit 0,1 ppm Silikonöl Wacker AK 1.000 versetzt.

### Wasserbasislack K-2:

Wasserbasislack 1 wurde mit 0,5ppm Silikonöl Wacker AK 100.000 versetzt.

### Wasserbasislack K-3:

Wasserbasislack 1 wurde mit 0,1 ppm eines fluorierten Verlaufshilfsmittels (Byk-066N) versetzt.

### 3. Herstellung von erfindungsgemäßen Wasserbasislacken

### Wasserbasislack E1:

Zur Herstellung des erfindungsgemäßen Wasserbasislacks E1 wurden 100 Gewichtsteile des Wasserbasislacks K-1 mit 2 Gewichtsteilen einer Mischung aus 6,25 Gew.% EFKA-3772 (BASF), 31,25 Gew.% Isopar V und 62,5% Gew.% Isopar L versetzt.

### Wasserbasislack E2:

Zur Herstellung des erfindungsgemäßen Wasserbasislacks E2 wurden 100 Gewichtsteile des Wasserbasislacks K-2 mit 2 Gewichtsteilen einer Mischung aus 6,25 Gew.% EFKA-3772 (BASF), 31,25 Gew.% Isopar V und 62,5% Gew.% Isopar L versetzt.

### Wasserbasislack E3:

Zur Herstellung des erfindungsgemäßen Wasserbasislacks E3 wurden 100 Gewichtsteile des Wasserbasislacks K-3 mit 2 Gewichtsteilen einer Mischung aus 6,25 Gew.% EFKA-3772 (BASF), 31,25 Gew.% Isopar V und 62,5% Gew.% Isopar L versetzt.

### 4. Applikation der Wasserbasislacke und Bewertung der erhaltenen Mehrschichtlackierungen

Die Basislacke wurden auf Aluminiumbleche der Abmessungen 40 x 40 cm mit einer Schichtdicke von 8-12µm appliziert. Nach Trocknung der Basislackschichten (10 Minuten bei 80°C) wurde die getrocknete Wasserbasislackschicht mit einem handelsüblichen Zweikomponentenklarlack überlackiert. Anschließend wurden die Wasserbasislackschicht und Klarlackschicht in einem Umluftofen während 20 Minuten bei 140°C gehärtet. Die Anzahl der Krater in der Mehrschichtlackierung wurde visuell bestimmt. Die Versuchsergebnisse können folgender Tabelle entnommen werden:

**Tabelle B: Krater in den Mehrschichtlackierungen der Wasserbasislacke 1, K-1 bis K-3 und E1 bis E3**

| **WBL** | **Summe der Krater auf 3 Blechen** | **Beurteilung** |
|---|---|---|
| 1 | 0 | iO |
| K-1 | 21 | niO |
| E1 | 1 | iO |
| K-2 | 18 | niO |
| E2 | 4 | iO |
| K-3 | 16 | niO |
| E3 | 3 | iO |

Die Ergebnisse zeigen, dass der erfindungsgemäße Einsatz der Mischungen M die Krateranzahl signifikant erniedrigt.

## Patentansprüche

1. Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, der eine Mischung M, bestehend aus (K1) einem verzweigten, 8 bis 17, bevorzugt 10 bis 17, besonders bevorzugt 10 bis 16 Kohlenstoffatome aufweisenden Alkan oder einer Mischung aus derartigen Alkanen, (K2) einem verzweigten, 18 bis 25, bevorzugt 18 bis 24, besonders bevorzugt 18 bis 22 Kohlenstoffatome aufweisenden Alkan oder einer Mischung aus derartigen Alkanen und (K3) einem wassermischbaren fluorierten Polymer oder eine Mischung aus wassermischbaren fluorierten Polymeren, enthält, wobei
• die Mischung M in einer Menge von 0,1 bis 5 Gew.-%, bezogen auf das Gewicht des in Stufe (1) aufgetragenen wässrigen Basislacks, vorliegt,
• die Komponente (K1) in einer Menge von 34 bis 94, bevorzugt 34 bis 89, besonders bevorzugt 34 bis 84 Gew.-%, bezogen auf das Gewicht der Mischung M vorliegt,
• die Komponente (K2) in einer Menge von 5 bis 46, bevorzugt 10 bis 46, besonders bevorzugt 10 bis 40 Gew.-%, bezogen auf das Gewicht der Mischung M vorliegt,
• die Komponente (K3) in einer Menge von 1 bis 20, bevorzugt 1 bis 18, besonders bevorzugt 1 bis 15 Gew.-%, bezogen auf das Gewicht der Mischung M vorliegt,
• die Komponenten (K1) und (K2) einen Verzweigungsgrad aufweisen, der einem Verhältnis der Zahl der >CH- und -CH₂-Gruppen zu der Zahl der -CH₃ Gruppen von mindestens 25:75, bevorzugt 30:70, besonders bevorzugt 40:60 entspricht.

2. Verfahren nach Anspruch 1, **dadurch gekennzeichnet, dass** die Komponente (K3) aus einem wassermischbaren Poly(meth)acrylatharz besteht, das ein gewichtsmittleres Molekulargewicht von 500 bis 100.000, bevorzugt 1.000 bis 90.000, besonders bevorzugt 2.000 bis 75.000 Dalton, gemessen mittels Gelpermeationschromatographie gegen einen Polystyrolstandard nach DIN 55672-1 bis 3, aufweist und herstellbar ist durch Polymerisation von (a) 1 bis 50, bevorzugt 2 bis 40, besonders bevorzugt 4 bis 35 Gew.% eines ethylenisch ungesättigten Monomeren, das eine perfluorierte Alkylgruppe mit 2 bis 10, bevorzugt 2 bis 8, besonders bevorzugt 3 bis 8 Kohlenstoffatomen enthält, oder einer Mischung aus solchen Monomeren, (b) 0,1 bis 30, bevorzugt 0,5 bis 25, besonders bevorzugt 1 bis 20 Gew% eines ethylenisch ungesättigten Monomeren, das mindestens eine hydrophile Gruppe enthält, oder eine Mischung aus derartigen Monomeren, (c) 49,9 bis 89,9, bevorzugt 59,5 bis 79,5, besonders bevorzugt 54 bis 64 Gew.% eines aliphatischen, cycloaliphatischen oder aromatischen, bevorzugt eines aliphatischen oder cycloaliphatischen, besonders bevorzugt eines aliphatischen Methacryl- oder Acrylsäureesters oder eine Mischung aus derartigen Estern und (d) 0 bis 40, bevorzugt 0 bis 30, besonders bevorzugt 0 bis 20 Gew. % eines von (a), (b) und (c) verschiedenen ethylenisch ungesättigten Monomeren.

3. Verfahren nach Anspruch 1 oder 2, **dadurch gekennzeichnet, dass** das als Komponente (K3) eingesetzte Poly(meth)acrylatharz Säuregruppen enthält und eine Säurezahl von 20 bis 300, bevorzugt 30 bis 250 und besonders bevorzugt 30 bis 200 mg KOH/g aufweist.

4. Verfahren nach einem oder mehreren der Ansprüche 1 bis 3, **dadurch gekennzeichnet, dass** die Mischung M in einer Menge von 0,15 bis 5, bevorzugt 0,2 bis 4,5 Gew.-%, bezogen auf das Gewicht des in Stufe (1) aufgetragenen wässrigen Basislacks, vorliegt.

5. Verfahren nach einem oder mehreren der Ansprüche 1 bis 4, **dadurch gekennzeichnet, dass** in Stufe (1) ein pigmentierter wässriger Basislack eingesetzt wird, der als Bindemittel mindestens ein gesättigtes oder ungesättigtes Polyurethanharz enthält.

6. Verfahren nach einem oder mehreren der Ansprüche 1 bis 5, **dadurch gekennzeichnet dass** in Stufe (1) ein pigmentierter wässriger Basislack eingesetzt wird, der mindestens ein Vernetzungsmittel ausgewählt aus der Gruppe bestehend aus Aminoplastharzen und blockierten oder unblockierten Polyisocyanaten enthält.

7. Pigmentierte wässrige Lacke, **dadurch gekennzeichnet, dass** sie eine Mischung M, bestehend aus (K1) einem verzweigten, 8 bis 17 bevorzugt 10 bis 17, besonders bevorzugt 10 bis 16 Kohlenstoffatome aufweisenden Alkan oder einer Mischung aus derartigen Alkanen, (K2) einem verzweigten, 18 bis 25, bevorzugt 18 bis 24, besonders bevorzugt 18 bis 22 Kohlenstoffatome aufweisenden Alkan oder einer Mischung aus derartigen Alkanen und (K3) einem wassermischbaren fluorierten Polymer oder eine Mischung aus wassermischbaren fluorierten Polymeren, enthält, wobei
• die Mischung M in einer Menge von 0,1 bis 5 Gew.-%, bezogen auf das Gewicht des in Stufe (1) aufgetragenen wässrigen Basislacks, vorliegt,
• die Komponente (K1) in einer Menge von 34 bis 94, bevorzugt 34 bis 89, besonders bevorzugt 34 bis 84 Gew.-%, bezogen auf das Gewicht der Mischung M vorliegt,
• die Komponente (K2) in einer Menge von 5 bis 46, vorzugsweise 10 bis 46, besonders bevorzugt 10 bis 40 Gew.-%, bezogen auf das Gewicht der Mischung M vorliegt,
• die Komponente (K3) in einer Menge von 1 bis 20, bevorzugt 1 bis 18, besonders bevorzugt 1 bis 15 Gew.-%, bezogen auf das Gewicht der Mischung M vorliegt,
• die Komponenten (K1) und (K2) einen Verzweigungsgrad aufweisen, der einem Verhältnis der Zahl der >CH- und -CH₂-Gruppen zu der Zahl der -CH₃ Gruppen von mindestens 25:75, bevorzugt 30:70, besonders bevorzugt 40:60 entspricht.

8. Verwendung von Mischungen M, bestehend aus (K1) einem verzweigten, 8 bis 17, bevorzugt 10 bis 17, besonders bevorzugt 10 bis 16 Kohlenstoffatome aufweisenden Alkan oder einer Mischung aus derartigen Alkanen, (K2) einem verzweigten, 18 bis 25, bevorzugt 18 bis 24, besonders bevorzugt 18 bis 22 Kohlenstoffatome aufweisenden Alkan oder einer Mischung aus derartigen Alkanen und (K3) einem wassermischbaren fluorierten Polymer oder eine Mischung aus wassermischbaren fluorierten Polymeren, wobei
• die Komponente (K1) in einer Menge von 34 bis 94, bevorzugt 34 bis 89, besonders bevorzugt 34 bis 84 Gew.-%, bezogen auf das Gewicht der Mischung M vorliegt,
• die Komponente (K2) in einer Menge von 5 bis 46, vorzugsweise 10 bis 46, besonders bevorzugt 10 bis 40 Gew.-%, bezogen auf das Gewicht der Mischung M vorliegt,
• die Komponente (K3) in einer Menge von 1 bis 20, bevorzugt 1 bis 18, besonders bevorzugt 1 bis 15 Gew.-%, bezogen auf das Gewicht der Mischung M vorliegt,
• die Komponenten (K1) und (K2) einen Verzweigungsgrad aufweisen, der einem Verhältnis der Zahl der >CH- und -CH₂-Gruppen zu der Zahl der -CH₃ Gruppen von mindestens 25:75, bevorzugt 30:70, besonders bevorzugt 40:60 entspricht,
zur Verminderung von Oberflächenstörungen in aus wässrigen pigmentierten Lacken hergestellten Lackierungen.

## Claims

1. Method for producing a multicoat color and/or effect painting system by
(1) applying a pigmented aqueous basecoat material to a substrate,
(2) forming a polymer film from the coating material applied in stage (1),
(3) applying a clearcoat material to the resultant basecoat film, and then
(4) curing the basecoat film together with the clearcoat film,
**characterized in that** use is made in stage (1) of a pigmented aqueous basecoat material which comprises a mixture M composed of (K1) a branched alkane having 8 to 17, preferably 10 to 17, more preferably 10 to 16 carbon atoms or a mixture of such alkanes, (K2) a branched alkane having 18 to 25, preferably 18 to 24, more preferably 18 to 22 carbon atoms or a mixture of such alkanes, and (K3) a water-miscible fluorinated polymer or a mixture of water-miscible fluorinated polymers, where
• the mixture M is present in an amount of 0.1% to 5% by weight, based on the weight of the aqueous basecoat material applied in stage (1),
• component (K1) is present in an amount of 34% to 94%, preferably 34% to 89%, more preferably 34% to 84% by weight, based on the weight of the mixture M,
• component (K2) is present in an amount of 5% to 46%, preferably 10% to 46%, more preferably 10% to 40% by weight, based on the weight of the mixture M,
• component (K3) is present in an amount of 1% to 20%, preferably 1% to 18%, more preferably 1% to 15% by weight, based on the weight of the mixture M, and
• components (K1) and (K2) have a degree of branching which corresponds to a ratio of the number of >CH- and -CH₂- groups to the number of -CH₃ groups of at least 25:75, preferably 30:70, more preferably 40:60.

2. Method according to Claim 1, **characterized in that** component (K3) is composed of a water-miscible poly(meth)acrylate resin which has a weight-average molecular weight of 500 to 100 000, preferably 1000 to 90 000, more preferably 2000 to 75 000 daltons as measured by means of gel permeation chromatography against a polystyrene standard in accordance with DIN 55672-1 to 3 and which is preparable by polymerization of (a) 1% to 50%, preferably 2% to 40%, more preferably 4% to 35% by weight of an ethylenically unsaturated monomer which contains a perfluorinated alkyl group having 2 to 10, preferably 2 to 8, more preferably 3 to 8 carbon atoms, or a mixture of such monomers, (b) 0.1% to 30%, preferably 0.5% to 25%, more preferably 1% to 20% by weight of an ethylenically unsaturated monomer which contains at least one hydrophilic group, or a mixture of such monomers, (c) 49.9% to 89.9%, preferably 59.5% to 79.5%, more preferably 54% to 64% by weight of an aliphatic, cycloaliphatic or aromatic, preferably an aliphatic or cycloaliphatic, more preferably an aliphatic methacrylic or acrylic ester or a mixture of such esters, and (d) 0% to 40%, preferably 0% to 30%, more preferably 0% to 20% by weight of an ethylenically unsaturated monomer different from (a), (b), and (c).

3. Method according to Claim 1 or 2, **characterized in that** the poly(meth)acrylate resin used as component (K3) comprises acid groups and has an acid number of 20 to 300, preferably 30 to 250, and more preferably 30 to 200 mg KOH/g.

4. Method according to one or more of Claims 1 to 3, **characterized in that** the mixture M is present in an amount of 0.15% to 5%, preferably 0.2% to 4.5%, by weight, based on the weight of the aqueous basecoat material applied in stage (1).

5. Method according to one or more of Claims 1 to 4, **characterized in that** a pigmented aqueous basecoat material is used in stage (1) that comprises as binder at least one saturated or unsaturated polyurethane resin.

6. Method according to one or more of Claims 1 to 5, **characterized in that** a pigmented aqueous basecoat material is used in stage (1) that comprises at least one crosslinking agent selected from the group consisting of amino resins and blocked or nonblocked polyisocyanates.

7. Pigmented aqueous coating materials, **characterized in that** they comprise a mixture M composed of (K1) a branched alkane having 8 to 17, preferably 10 to 17, more preferably 10 to 16 carbon atoms or a mixture of such alkanes, (K2) a branched alkane having 18 to 25, preferably 18 to 24, more preferably 18 to 22 carbon atoms or a mixture of such alkanes, and (K3) a water-miscible fluorinated polymer or a mixture of water-miscible fluorinated polymers, where
• the mixture M is present in an amount of 0.1% to 5% by weight, based on the weight of the aqueous basecoat material applied in stage (1),
• component (K1) is present in an amount of 34% to 94%, preferably 34% to 89%, more preferably 34% to 84% by weight, based on the weight of the mixture M,
• component (K2) is present in an amount of 5% to 46%, preferably 10% to 46%, more preferably 10% to 40% by weight, based on the weight of the mixture M,
• component (K3) is present in an amount of 1% to 20%, preferably 1% to 18%, more preferably 1% to 15% by weight, based on the weight of the mixture M, and
• components (K1) and (K2) have a degree of branching which corresponds to a ratio of the number of >CH- and -CH₂- groups to the number of -CH₃ groups of at least 25:75, preferably 30:70, more preferably 40:60.

8. Use of mixtures M composed of (K1) a branched alkane having 8 to 17, preferably 10 to 17, more preferably 10 to 16 carbon atoms or a mixture of such alkanes, (K2) a branched alkane having 18 to 25, preferably 18 to 24, more preferably 18 to 22 carbon atoms or a mixture of such alkanes, and (K3) a water-miscible fluorinated polymer or a mixture of water-miscible fluorinated polymers, where
• component (K1) is present in an amount of 34% to 94%, preferably 34% to 89%, more preferably 34% to 84% by weight, based on the weight of the mixture M,
• component (K2) is present in an amount of 5% to 46%, preferably 10% to 46%, more preferably 10% to 40% by weight, based on the weight of the mixture M,
• component (K3) is present in an amount of 1% to 20%, preferably 1% to 18%, more preferably 1% to 15% by weight, based on the weight of the mixture M, and
• components (K1) and (K2) have a degree of branching which corresponds to a ratio of the number of >CH- and -CH₂- groups to the number of -CH₃ groups of at least 25:75, preferably 30:70, more preferably 40:60,
for reducing surface defects in paint systems produced from aqueous pigmented coating materials.

## Revendications

1. Procédé de fabrication d'un laquage multicouche colorant et/ou à effet, selon lequel
(1) une laque de base aqueuse pigmentée est appliquée sur un substrat,
(2) un film polymère est formé à partir de la laque appliquée à l'étape (1),
(3) une laque transparente est appliquée sur la couche de laque de base ainsi obtenue, puis
(4) la couche de laque de base est durcie conjointement avec la couche de laque transparente, **caractérisé en ce qu'**à l'étape (1), une laque de base aqueuse pigmentée est utilisée, qui contient un mélange M constitué par (K1) un alcane ramifié, comprenant 8 à 17, de préférence 10 à 17, de manière particulièrement préférée 10 à 16 atomes de carbone, ou un mélange de tels alcanes, (K2) un alcane ramifié, comprenant 18 à 25, de préférence 18 à 24, de manière particulièrement préférée 18 à 22 atomes de carbone, ou un mélange de tels alcanes, et (K3) un polymère fluoré miscible avec l'eau ou un mélange de polymères fluorés miscibles avec l'eau,
- le mélange M étant présent en une quantité de 0,1 à 5 % en poids, par rapport au poids de la laque de base aqueuse appliquée à l'étape (1),
- le composant (K1) étant présent en une quantité de 34 à 94, de préférence de 34 à 89, de manière particulièrement préférée de 34 à 84 % en poids, par rapport au poids du mélange M,
- le composant (K2) étant présent en une quantité de 5 à 46, de préférence de 10 à 46, de manière particulièrement préférée de 10 à 40 % en poids, par rapport au poids du mélange M,
- le composant (K3) étant présent en une quantité de 1 à 20, de préférence de 1 à 18, de manière particulièrement préférée de 1 à 15 % en poids, par rapport au poids du mélange M,
- les composants (K1) et (K2) présentant un degré de ramification qui correspond à un rapport entre le nombre de groupes >CH- et -CH₂- et le nombre de groupes -CH₃ d'au moins 25:75, de préférence de 30:70, de manière particulièrement préférée de 40:60.

2. Procédé selon la revendication 1, **caractérisé en ce que** le composant (K3) est constitué d'une résine de poly(méth)acrylate miscible avec l'eau qui présente un poids moléculaire moyen en poids de 500 à 100 000, de préférence de 1 000 à 90 000, de manière particulièrement préférée de 2 000 à 75 000 Dalton, mesuré par chromatographie par perméation de gel contre un étalon polystyrène selon DIN 55672-1 à 3, et qui peut être fabriquée par polymérisation de (a) 1 à 50, de préférence 2 à 40, de manière particulièrement préférée 4 à 35 % en poids d'un monomère éthyléniquement insaturé, qui contient un groupe alkyle perfluoré contenant 2 à 10, de préférence 2 à 8, de manière particulièrement préférée 3 à 8 atomes de carbone, ou un mélange de tels monomères, (b) 0,1 à 30, de préférence 0,5 à 25, de manière particulièrement préférée 1 à 20 % en poids d'un monomère éthyléniquement insaturé, qui contient au moins un groupe hydrophile, ou un mélange de tels monomères, (c) 49,9 à 89,9, de préférence 59,5 à 79,5, de manière particulièrement préférée 54 à 64 % en poids d'un ester de l'acide méthacrylique ou acrylique aliphatique, cycloaliphatique ou aromatique, de préférence aliphatique ou cycloaliphatique, de manière particulièrement préférée aliphatique, ou un mélange de tels esters, et (d) 0 à 40, de préférence 0 à 30, de manière particulièrement préférée 0 à 20 % en poids d'un monomère éthyléniquement insaturé différent de (a), (b) et (c).

3. Procédé selon la revendication 1 ou 2, **caractérisé en ce que** la résine de poly(méth)acrylate utilisée en tant que composant (K3) contient des groupes acides et présente un indice d'acidité de 20 à 300, de préférence de 30 à 250 et de manière particulièrement préférée de 30 à 200 mg KOH/g.

4. Procédé selon une ou plusieurs des revendications 1 à 3, **caractérisé en ce que** le mélange M est présent en une quantité de 0,15 à 5, de préférence de 0,2 à 4,5 % en poids, par rapport au poids de la laque de base aqueuse appliquée à l'étape (1).

5. Procédé selon une ou plusieurs des revendications 1 à 4, **caractérisé en ce qu'**une laque de base aqueuse pigmentée est utilisée à l'étape (1), qui contient en tant que liant au moins une résine de polyuréthane saturée ou insaturée.

6. Procédé selon une ou plusieurs des revendications 1 à 5, **caractérisé en ce qu'**une laque de base aqueuse pigmentée est utilisée à l'étape (1), qui contient au moins un agent de réticulation choisi dans le groupe constitué par les résines aminoplastes et les polyisocyanates bloqués ou non bloqués.

7. Laques aqueuses pigmentées, **caractérisées en ce qu'**elles contiennent un mélange M constitué par (K1) un alcane ramifié, comprenant 8 à 17, de préférence 10 à 17, de manière particulièrement préférée 10 à 16 atomes de carbone, ou un mélange de tels alcanes, (K2) un alcane ramifié, comprenant 18 à 25, de préférence 18 à 24, de manière particulièrement préférée 18 à 22 atomes de carbone, ou un mélange de tels alcanes, et (K3) un polymère fluoré miscible avec l'eau ou un mélange de polymères fluorés miscibles avec l'eau,
- le mélange M étant présent en une quantité de 0,1 à 5 % en poids, par rapport au poids de la laque de base aqueuse appliquée à l'étape (1),
- le composant (K1) étant présent en une quantité de 34 à 94, de préférence de 34 à 89, de manière particulièrement préférée de 34 à 84 % en poids, par rapport au poids du mélange M,
- le composant (K2) étant présent en une quantité de 5 à 46, de préférence de 10 à 46, de manière particulièrement préférée de 10 à 40 % en poids, par rapport au poids du mélange M,
- le composant (K3) étant présent en une quantité de 1 à 20, de préférence de 1 à 18, de manière particulièrement préférée de 1 à 15 % en poids, par rapport au poids du mélange M,
- les composants (K1) et (K2) présentant un degré de ramification qui correspond à un rapport entre le nombre de groupes >CH- et -CH₂- et le nombre de groupes -CH₃ d'au moins 25:75, de préférence de 30:70, de manière particulièrement préférée de 40:60.

8. Utilisation de mélanges M, constitués par (K1) un alcane ramifié, comprenant 8 à 17, de préférence 10 à 17, de manière particulièrement préférée 10 à 16 atomes de carbone, ou un mélange de tels alcanes, (K2) un alcane ramifié, comprenant 18 à 25, de préférence 18 à 24, de manière particulièrement préférée 18 à 22 atomes de carbone, ou un mélange de tels alcanes, et (K3) un polymère fluoré miscible avec l'eau ou un mélange de polymères fluorés miscibles avec l'eau,
- le composant (K1) étant présent en une quantité de 34 à 94, de préférence de 34 à 89, de manière particulièrement préférée de 34 à 84 % en poids, par rapport au poids du mélange M,
- le composant (K2) étant présent en une quantité de 5 à 46, de préférence de 10 à 46, de manière particulièrement préférée de 10 à 40 % en poids, par rapport au poids du mélange M,
- le composant (K3) étant présent en une quantité de 1 à 20, de préférence de 1 à 18, de manière particulièrement préférée de 1 à 15 % en poids, par rapport au poids du mélange M,
- les composants (K1) et (K2) présentant un degré de ramification qui correspond à un rapport entre le nombre de groupes >CH- et -CH₂- et le nombre de groupes -CH₃ d'au moins 25:75, de préférence de 30:70, de manière particulièrement préférée de 40:60,
pour réduire les perturbations de surface dans des laquages fabriqués à partir de laques pigmentées aqueuses.
